# EUROPÄISCHE PATENTSCHRIFT

(11) **EP 1 809 990 B1**
(45) Veröffentlichungstag und Bekanntmachung des Hinweises auf die Patenterteilung: **18.05.2016**
(21) Anmeldenummer: 04822376.2
(22) Anmeldetag: 10.11.2004
(51) Int. Cl.: G01F 1/58

(54) **ROHRFÖRMIGER EINSATZ FÜR EINEN MAGNETISCH INDUKTIVEN DURCHFLUSSMESSER**
TUBULAR INSERT FOR A MAGNETIC INDUCTIVE FLOW METER
PIECE TUBULAIRE POUR DEBITMETRE INDUCTIF MAGNETIQUE

(43) Veröffentlichungstag der Anmeldung: 25.07.2007
(73) Patentinhaber: Siemens Aktiengesellschaft, 80333 München (DE)
(72) Erfinder: NIELSEN, Søren, DK-6400 Sønderborg (DK)
(86) Internationale Anmeldenummer: PCT/EP2004/012725
(87) Internationale Veröffentlichungsnummer: WO 2006/050744

(56) Entgegenhaltungen:
- EP-A- 0 766 069
- PATENT ABSTRACTS OF JAPAN Bd. 1998, Nr. 12, 31. Oktober 1998 (1998-10-31) & JP 10 197301 A (YAMATAKE HONEYWELL CO LTD), 31. Juli 1998 (1998-07-31)
- PATENT ABSTRACTS OF JAPAN Bd. 009, Nr. 064 (P-343), 23. März 1985 (1985-03-23) & JP 59 198318 A (YAMATAKE HONEYWELL KK), 10. November 1984 (1984-11-10)

## Beschreibung

Die Erfindung betrifft einen rohrförmigen Einsatz für einen magnetisch induktiven Durchflussmesser nach dem Oberbegriff des Anspruchs 1, ein Verfahren zum Herstellen eines derartigen rohrförmigen Einsatzes sowie einen Durchflussmesser, der mit einen derartigen rohrförmigen Einsatz versehen ist.

Magnetisch induktive Durchflussmesser nutzen das Faraday'sche Induktionsgesetz zur Bestimmung der Strömungsgeschwindigkeit eines durchströmenden Fluids. Ein magnetisches Feld wird senkrecht zu der Strömungsrichtung erzeugt. In diesem Magnetfeld erzeugen Ladungen, die mit dem Fluid transportiert werden, eine Spannung senkrecht zu dem Magnetfeld und zu der Durchflussrichtung, die mit Hilfe von Elektroden abgenommen werden kann. Die so ermittelte Messspannung ist proportional zu einer über den Strömungsquerschnitt bestimmten Strömungsgeschwindigkeit. Derartige Durchflussmesser müssen zur Gewährleistung der Messgenauigkeit unabhängig vom jemals herrschenden Druck des durchströmenden Fluids weitgehend konstante geometrische Abmessungen beibehalten. Diese Druckfestigkeit wird häufig durch ein Messrohr aus Stahl erreicht, durch welches das Fluid strömt. Andererseits darf dieses Messrohr nicht die elektrischen und magnetischen Felder stören, welche das Fluid im Bereich eines Messabschnitts durchsetzen. Aus diesem Grund werden im Messrohr Auskleidungen oder Einsätze verwendet, die typischerweise aus Keramik oder Kunststoffmaterialien hergestellt werden. Diese erfüllen die Forderungen, elektrisch nicht leitend zu sein und das Magnetfeld kaum zu beeinflussen. Gleichzeitig schützen sie die Metallwand des Messrohrs gegen Korrosion. Dabei haben Einsätze aus einem Kunststoffmaterial den Vorteil, dass sie besonders leicht handhabbar sind. Insbesondere im Fall von ausgehärteten Kunststoffauskleidungen oder Einsätzen besteht jedoch das Problem, dass sie entweder nicht ausreichend formstabil sind oder dass sie ihre Formstabilität im Lauf der Zeit verlieren. Beispielsweise neigt ein Kunststoffeinsatz beim Auftreten eines Druckes, der wesentlich kleiner als der atmosphärische Druck ist, dazu, sich von der Innenwand des Messrohrs zu lösen, wodurch der Strömungsquerschnitt verringert wird.

Aus der EP 0 895 066 A1 ist ein rohrförmiger Einsatz für einen magnetisch induktiven Durchflussmesser bekannt, der aus einem Elastomer, vorzugsweise synthetischem Gummi, als elektrisch isolierendem Material besteht. Damit der rohrförmige Einsatz in seinem Messabschnitt weniger elastisch ist, wurden Bänder aus Stahl in diesem Bereich in das Gummi eingebettet. Im Bereich der beiden Endabschnitte ist keine Verstärkung vorhanden. Darüber, wie die Stahlbänder in das Gummi eingebettet werden, das heißt wie ein verstärkter, rohrförmiger Einsatz hergestellt werden kann, werden in dieser Druckschrift keine Angaben gemacht. Der bekannte Einsatz hat den Nachteil, dass das Gummi auf der Innenseite der Stahlbänder nicht dauerhaft befestigt ist und sich somit die geometrischen Abmessungen des rohrförmigen Einsatzes bei Druckschwankungen verändern können.

Aus der US-PS 5,773,723 ist ein magnetisch induktiver Durchflussmesser mit einem Messrohr bekannt, dessen Innenseite mit Perfluoralkoxy (PFA) ausgekleidet ist. Diese Auskleidung wird in einem Messabschnitt durch ein eingebettetes Metallgitter stabilisiert, damit der Innendurchmesser des Rohres konstant bleibt. Das im Wesentlichen rohrförmige Metallgitter ist durch spiralförmiges Biegen eines Gitterbandes und Verschweißen der aneinanderstoßenden Ränder des Gitterbandes gebildet. An der Außenseite des Gitters sind gleich verteilt über den Rohrumfang mehrere, parallel zur Rohrachse verlaufende Drähte aufgeschweißt. Diese dienen dazu, einen konstanten Abstand zwischen der Innenwand des Messrohres und der Außenseite des Gitters sicherzustellen. Das Gitter wird in das Messrohr eingeschoben und dort durch die aufgeschweißten Drähte zentriert. An den beiden Endseiten wird das rohrförmige Metallgitter mit der Innenseite des Messrohres verschweißt. Das Auskleidungsmaterial aus PFA wird zwischen eine in das Messrohr eingesetzte Spritzform und die Messrohrinnenwand im Spritzgießverfahren eingefügt, durchfließt dabei die Öffnungen im Metallgitter und füllt den Zwischenraum zwischen dem Gitter und der Innenwand des Messrohres aus, wobei es eine Lage konstanter Dicke bildet. Die bekannte Auskleidung eines Messrohres hat jedoch den Nachteil, dass ihre Herstellung vergleichsweise aufwendig ist. Zudem ist es schwierig, bei Herstellung des rohrförmigen Metallgitters aus einem spiralförmig gebogenen Metallgitterband konisch verlaufende Rohrenden anzuformen. Konisch verlaufende Rohrenden des Innenquerschnitts werden jedoch häufig bei magnetisch induktiven Durchflussmessern vorgesehen, um im Messabschnitt eine höhere Strömungsgeschwindigkeit und somit eine bessere Messgenauigkeit zu erreichen.

Aus der JP-A 10 197301 ist ein Messrohr für ein elektromagnetisches Durchflussmessgerät bekannt, welches eine Innenauskleidung aus einem im Wesentlichen elektrisch isolierenden Material trägt. Die Innenauskleidung ist mit einer mechanischen Verstärkung versehen, welche ein Ablösen von der Messrohrinnenwand oder eine Verformung verhindern soll. Auf die rohrförmige Verstärkung sind durch Punktschweißen Abstandhalter aufgebracht, mit welchen die Verstärkung an der Innenwand des Messrohrs befestigt ist. Durch die Abstandhalter wird ein Mindestabstand zwischen der Verstärkung und der Innenwand gewährleistet.

Der Erfindung liegt die Aufgabe zugrunde, einen rohrförmigen Einsatz für einen magnetisch induktiven Durchflussmesser zu schaffen, der bei seiner Verwendung in einem Durchflussmesser robust ist und zu einem Durchflussmesser mit dauerhaft guter Messgenauigkeit und vergleichsweise geringen Herstellungskosten führt.

Zur Lösung dieser Aufgabe weist der neue rohrförmige Einsatz für einen magnetisch induktiven Durchflussmesser der eingangs genannten Art die im kennzeichnenden Teil des Anspruchs 1 angegebenen Merkmale auf. Ein Verfahren zum Herstellen des rohrförmigen Einsatzes ist in Anspruch 6, ein Durchflussmesser mit einem derartigen Rohreinsatz in Anspruch 7 beschrieben. In den abhängigen Ansprüchen sind vorteilhafte Weiterbildungen der Erfindung angegeben.

Die Erfindung hat den Vorteil, dass ein rohrförmiger Einsatz für einen magnetisch induktiven Durchflussmesser vollständig außerhalb des Messrohres mit bereits eingebettetem Metallgitter zur mechanischen Verstärkung vorgefertigt werden kann. Damit wird in vorteilhafter Weise der Herstellungsaufwand eines Durchflussmessers verringert. Dabei zeichnet sich der rohrförmige Einsatz durch eine dauerhafte Haltbarkeit und geometrische Stabilität aufgrund der mechanischen Verstärkung mit einem Metallgitter aus. Das elektrisch isolierende Material wird allein durch mechanische Kräfte an seinem Platz gehalten. Da es sich auf beiden Seiten des Metallgitters befindet und die Öffnungen des Metallgitters durchdringt, müsste das elektrisch isolierende Material auseinander reißen, um sich vom Metallgitter zu lösen und bei evtl. Unterdruck im Messrohr zusammenzufallen. Es ist daher kein Kleber zwischen dem elektrisch isolierenden Material und dem Metallgitter erforderlich, der eine Langzeitstabilität des rohrförmigen Einsatzes einschränken könnte. Aufgrund des Aufbaus des rohrförmigen Einsatzes bestehen zudem weniger Beschränkungen bezüglich der Auswahl eines geeigneten elektrisch isolierenden Materials, so dass die Wahl zwischen einer größeren Vielzahl geeigneter Materialien getroffen werden kann. Das ist von Vorteil, da der mögliche Einsatzbereich eines mit einem derartigen rohrförmigen Einsatz ausgestatteten Durchflussmessers erweitert wird. Auch flexible elektrisch isolierende Materialien können verwendet werden, da die im Messabschnitt gewünschte Stabilität der geometrischen Abmessungen durch die mechanische Verstärkung mit dem Metallgitter zuverlässig erreicht wird.

Da die Stoßstellen des oder der Gitterteile, an welchen geschweißt werden muss, im Wesentlichen parallel zur Rohrachse verlaufen, gestaltet sich der Schweißvorgang vergleichsweise einfach, da ein Schweißgerät ohne Weiteres entlang dieser Bahn geführt werden kann. Zudem erleichtert dieser Verlauf der Stoßstellen die Herstellung von Gitterteilen in einem einfachen Stanz- und Biegevorgang. Derartig vorgeformte Gitterteile können ohne Weiteres mit einem angebogenen Profil versehen werden, welches die Stabilität erhöht. Weiterhin ist es beim Biegevorgang ohne Schwierigkeiten möglich, die Gitterteile derart vorzuformen, dass ein rohrförmiges Metallgitter mit konischen Verlauf an seinen beiden Rohrenden entsteht. Dagegen müsste bei der bekannten Verwendung eines Metallbandes zur mechanischen Verstärkung das Band in einen mittleren Teil und zwei konische Endteile unterteilt werden, um eine derartige Form zu erreichen. Dies wäre mit einem erheblich höheren Fertigungsaufwand und evtl. mit einem Stabilitätsverlust an den Stoßstellen zwischen dem Mittelteil und dem jeweiligen Endteil verbunden. Gegenüber der Verwendung eines Metallgitterrohres als Basis zur Herstellung des rohrförmigen Metallgitters hat die Verwendung aus Gitterblech vorgeformter Gitterteile den Vorteil, dass diese in der Anschaffung wesentlich günstiger sind. An einem fertigen Metallgitterrohr wären zusätzliche, teure Arbeitsschritte erforderlich, um sicherzustellen, dass das elektrisch isolierende Material bei einem Press- oder Gießverfahren die Öffnungen des Metallgitters durchdringt und beide Seiten des Metallgitters im Wesentlichen bedeckt.

Das Metallgitter zur mechanischen Verstärkung kann zur Abschirmung der Spulen eines magnetisch induktiven Durchflussmessers vor elektrostatischen Feldern dienen. Ein zusätzliches Schirmblech zur Abschirmung ist dann nicht erforderlich.

In vorteilhafter Weise kann ein Mindestabstand zwischen der Außenfläche des rohrförmigen Metallgitters und der dieser gegenüberliegenden Innenseite einer Press- oder Gießform gewährleistet werden, wenn das rohrförmige Metallgitter Erhebungen in radialer Richtung aufweist. Somit kann eine vorgegebene Mindestdicke des elektrisch isolierenden Materials auf der jeweiligen Seite des Metallgitters eingehalten werden. Diese Erhebungen können beispielsweise als umlaufende Rippen ausgebildet sein, die in bestimmten Abständen zueinander angeordnet und zudem geeignet sind, das Metallgitter zusätzlich gegen Verformungen zu versteifen. Durch diese Abstandhalter wird sichergestellt, dass das elektrisch isolierende Material beim Press- oder Gießverfahren auf die Außenseite des rohrförmigen Metallgitters fließen kann.

Alternativ dazu könnten die Abstandhalter auch als Erhebungen in der Gießform ausgebildet sein. Eine zusätzliche Versteifung des rohrförmigen Metallgitters wird dann jedoch nicht erreicht.

Vorteilhaft kann das rohrförmige Metallgitter aus zwei im Wesentlichen gleichen, vorgeformten Gitterteilen bestehen, die auch als Halbschalen bezeichnet werden können. Derartige Halbschalen können in einem einfachen Stanz- und Biegeschritt gefertigt werden. Das führt zu einer weiteren Verringerung der Herstellungskosten, da der Herstellungsprozess schneller und billiger ist als Walzen und Schweißen des Gitterteils. Zudem ist es bei diesem Aufbau des Gitters in vorteilhafter Weise leicht möglich, ein Profil zur Verstärkung und als Abstandshalter in das Metallgitter zu prägen.

Wenn die beiden Halbschalen als Gitterteile an den Stoßstellen mit in radialer Richtung nach außen gebogenen Laschen versehen und an den Laschen miteinander verschweißt werden, so hat dies den Vorteil, dass sich der Schweißvorgang besonders einfach gestaltet, da die Laschen für ein Schweißgerät, zum Beispiel für ein elektrisches Punktschweißen, gut zugänglich sind.

Als elektrisch isolierendes Material kann vorteilhaft Gummi verwendet werden, das eine gute Elastizität besitzt. Wird der rohrförmige Einsatz an beiden Enden jeweils mit einem Befestigungsflansch versehen und zumindest in einem von beiden kein Metallgitter eingebettet, so kann der rohrförmige Einsatz trotz Flansch in einfacher Weise in ein Messrohr eines Durchflussmessers eingesetzt werden. Zum Einsetzen in das Messrohr des Durchflussmessers wird der flexible Flansch einfach zusammengedrückt und durch das Messrohr geführt. Der mechanisch verstärkte Messabschnitt, der mit dem Flansch verbunden ist, wird vollständig in das Messrohr eingeschoben. Sobald der Flansch durch das Messrohr hindurchgetreten ist, kann er wieder seine ursprüngliche Form annehmen. Der Einsatz ist dann durch die beiden Flansche sicher in dem Messrohr gehalten.

Alternativ zu Gummi können selbstverständlich andere elektrisch isolierende Materialien, beispielsweise Fluorpolymer oder PFA, für den rohrförmigen Einsatz verwendet werden. Eine flanschlose Gestaltung für ein Stahlrohr und eine Magnetanordnung, die auf der Außenseite des Stahlrohrs befestigt ist, ist ebenso möglich.

Eine besonders hohe Stabilität bei vergleichsweise geringer Dicke besitzt ein rohrförmiges Metallgitter, das vorteilhaft aus Edelstahl besteht. Aber auch Messing oder Aluminium sind als Materialien für das Metallgitter geeignet.

Besonders günstig ist ein robuster, rohrförmiger Einsatz herstellbar, wenn ein oder mehrere Gitterteile durch Stanzen und Biegen aus Gitterblech derart vorgefertigt und an im Wesentlichen parallel zur Rohrachse verlaufenden Stoßkanten zusammengeschweißt werden, dass ein im Wesentlichen rohrförmiges Metallgitter gebildet wird und wenn das rohrförmige Metallgitter derart durch ein Press- oder Gießverfahren in das elektrisch isolierende Material eingebettet wird, dass die Öffnungen des Metallgitters mit dem elektrisch isolierenden Material durchdrungen werden und dass das elektrisch isolierende Material die Innen- und die Außenseite des rohrförmigen Metallgitters im Wesentlichen bedeckt. Das hat insbesondere den Vorteil, dass das rohrförmige Metallgitter aus Gitterteilen geschweißt werden kann, die aus einem im Wesentlichen rechteckförmigen Gitterblech gefertigt sind. Nach dem Stanzen oder Abschneiden des Gitterblechs hat dieses an einer Seite eine Kantenlänge, die der Länge des mechanisch zu verstärkenden Rohrabschnitts entspricht. Durch Biegen werden aus dem zunächst flachen Gitterblechteil einseitig offene Rohrschalenteile als Gitterteile geformt, die in einfacher Weise zu einem geschlossenen Rohr entlang einer im Wesentlichen parallel zur Rohrachse verlaufenden Stoßkante miteinander verschweißt werden können. Beim Biegevorgang können die Gitterteile ohne Weiteres mit umlaufenden Stegen zur Erhöhung ihrer Stabilität versehen werden. Auch das Abkanten von radial nach außen weisenden Laschen ist problemlos möglich. Durch die umlaufenden Rippen wird in einfacher Weise beim Einlegen des rohrförmigen Metallgitters in eine Gießform ein Mindestabstand sichergestellt, der erforderlich ist, damit ein elektrisch isolierendes Material bei einem Press- oder Gießvorgang Öffnungen des Metallgitters durchdringt und seine beiden Seiten bedeckt.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: einen magnetisch induktiven Durchflussmesser mit teilweisem Längsschnitt,
- Figur 2: eine Struktur eines Metallgitters,
- Figur 3: eine Detailansicht eines Längsschnitts durch einen rohrförmigen Einsatz und
- Figur 4: eine perspektivische Ansicht auf ein durch Stanzen und Biegen vorgefertigtes Gitterteil.

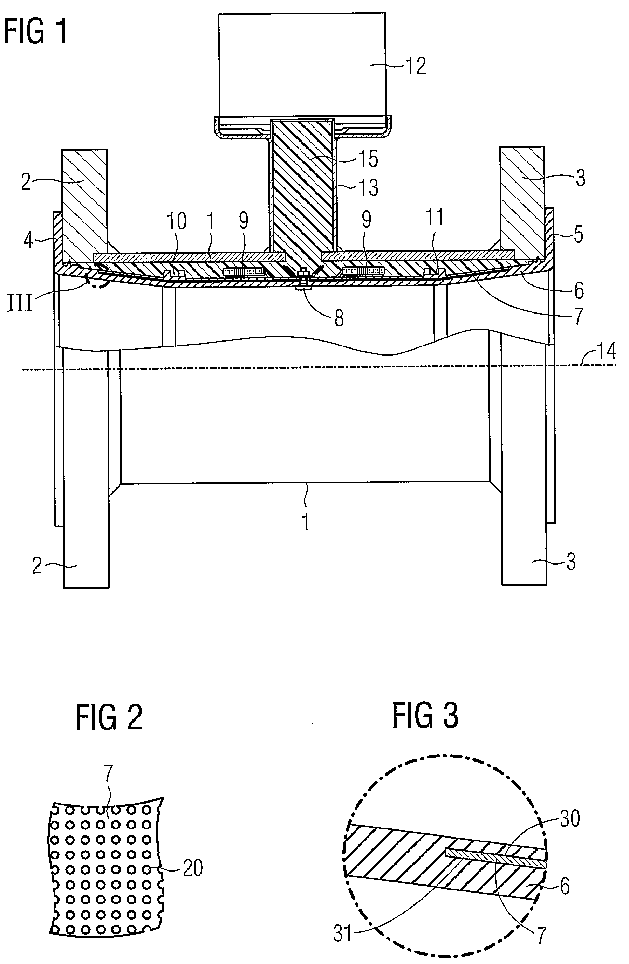

In den Figuren sind gleiche Teile mit gleichen Bezugszeichen versehen. Ein magnetisch induktiver Durchflussmesser weist gemäß Figur 1 ein Messrohr 1 auf, das an seinen beiden Enden mit einem Flansch 2 bzw. einem Flansch 3 zum Einbau in eine Rohrleitung versehen ist. Im oberen Teil von Figur 1 ist der Durchflussmesser zur besseren Anschaulichkeit in einem Längsschnitt gezeichnet. Auf den Außenseiten der beiden Befestigungsflansche 2 und 3 liegt jeweils ein flanschartig ausgebildeter Endabschnitt 4 bzw. 5 eines rohrförmigen Einsatzes 6 aus Gummi auf. Der rohrförmige Einsatz 6 trägt in einem Messabschnitt, in welchem er durch ein rohrförmiges Metallgitter 7 mechanisch verstärkt ist, vier Elektroden und zwei Spulen. Davon sind in Figur 1 lediglich eine Elektrode 8 für Bezugspotenzial sowie eine Spule 9 sichtbar. Umlaufende Nuten 10 und 11 dienen zur Lagesicherung von elektrischen Zuleitungen, die zur Verbindung der Elektroden und der Spulen mit einer Ansteuer- und Auswerteeinheit 12 erforderlich sind. Die Zuleitungen sind in Figur 1 der Anschaulichkeit wegen nicht dargestellt. Zur Montage des Durchflussmessers wird zunächst ein rohrförmiger Einsatz 6, dessen Herstellung später noch genauer beschrieben wird, mit zwei Spulen und den elektrischen Zuleitungen bestückt. Einer der beiden Endabschnitte 4 und 5, beispielsweise der Endabschnitt 4, der keine mechanische Verstärkung aufweist, wird zusammengefaltet, so dass er durch den Innenquerschnitt des Messrohrs 1 eingeschoben werden kann. Sobald der bestückte Einsatz 6 vollständig in das Messrohr 1 eingefügt ist, springt der Endabschnitt 4 in seine ursprüngliche Form zurück und der Einsatz 6 wird durch die beiden Endabschnitte 4 und 5, die auf den Außenseiten der Flansche 2 und 3 anliegen, in seiner Position im Messrohr 1 gehalten. Durch Löcher hindurch, die sich im Messrohr 1 befinden, werden die Elektroden, beispielsweise die Elektrode 8, in den rohrförmigen Einsatz 6 nach dessen Einsetzen in das Messrohr 1 befestigt. Die Hohlräume, die zwischen dem bestückten Einsatz 6 und dem Messrohr 1 verbleiben, werden durch eine aushärtbare Vergussmasse 15 aufgefüllt. Sobald diese Vergussmasse ausgehärtet ist, ist der Einsatz 6 im Messrohr 1 stabil fixiert. Zusätzlich wird er durch seine Endabschnitte 4 und 5 positioniert, die bei Einbau des Durchflussmessers in einer Rohrleitung zwischen dem Flansch 2 und dem jeweils gegenüberliegenden Flansch der Rohrleitung bzw. zwischen dem Flansch 3 und einem anderen Flansch der Rohrleitung eingequetscht werden. Zwischen der Magnetspule 9 und dem Einsatz 6 kann ein geerdetes Schirmblech eingefügt werden. Dieses kann jedoch weggelassen werden, wenn das Metallgitter 7 bereits für eine ausreichende Abschirmung sorgt.

Figur 2 zeigt eine Draufsicht auf einem Ausschnitt des Metallgitters 7, in welcher die Gitterstruktur gut erkennbar ist. In dem Metallgitter 7 befinden sich in Reihen und Spalten angeordnete Öffnungen 20, die bei einem fertigen rohrförmigen Einsatz 6 vollständig mit Gummi als elektrisch isolierendem Material gefüllt sind.

In Figur 3 ist als Detail ein Randbereich des rohrförmigen Metallgitters 7 dargestellt, das in Gummi als elektrisch isolierendem Material des Einsatzes 6 eingebettet ist. Es ist deutlich sichtbar, dass sowohl eine Außenseite 30 als auch eine Innenseite 31 des rohrförmigen Metallgitters 7 durch das elektrisch isolierende Material abgedeckt werden. Durch die vollständige Füllung der Öffnungen 20 (Figur 2) und die Bedeckung der Seiten 30 und 31 mit elektrisch isolierendem Material kann auf einen Klebstoff zur Befestigung am Metallgitter 7 verzichtet werden. Das elektrisch isolierende Material muss schon in den Öffnungen 20 auseinanderreißen, um sich vom Metallgitter 7 lösen zu können.

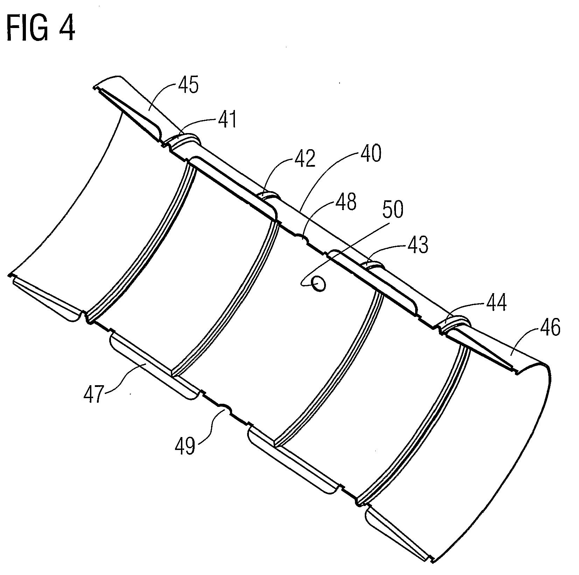

Das rohrförmige Metallgitter 7 (Figur 1) ist aus zwei Hälften, von denen eine in Figur 4 dargestellt ist, zusammengesetzt. Auf die Darstellung der Öffnungen der Gitterstruktur wurde der Anschaulichkeit wegen verzichtet. Die beiden Hälften sind identisch ausgebildet. Es genügt daher im Folgenden die Beschreibung lediglich eines in Figur 4 dargestellten Gitterteils 40 als eine der beiden Hälften. Dieses ist in einem vergleichsweise aufwandsarmen Herstellungsschritt durch Stanzen und Biegen aus einem Gitterblechteil gefertigt. Beim Biegevorgang werden vier nach außen hervorstehende Rippen 41, 42, 43 und 44 angeformt. Diese dienen in einer Press- oder Gießform als Abstandhalter zwischen der Außenfläche des Metallgitters und der Form. Gleichzeitig erhöhen sie die Stabilität des Gitterteils 40. Im selben Biegevorgang sind konische Enden 45 und 46 an das Gitterteil 40 angeformt. Weiterhin ist das Gitterteil 40 mit acht in radialer Richtung nach außen gebogenen Laschen versehen, von denen eine das Bezugszeichen 47 trägt. Werden die beiden Hälften eines rohrförmigen Metallgitters so zusammengelegt, dass eine Rohrform entsteht, so kommen die Laschen paarweise aufeinander zu liegen und können leicht mit einem Schweißgerät zusammengeschweißt werden. Vorteilhaft ist dabei, dass die Stoßstellen zwischen den beiden Hälften in einer zur Rohrachse 14 (Figur 1) parallelen Richtung verlaufen. Öffnungen 48 und 49, von denen im Figur 4 jeweils nur die Hälfte sichtbar ist, da sich die jeweils andere Hälfte in dem nicht dargestellten Gegenstück befindet, dienen zur Durchführung zweier Elektroden, mit welchen im Messbetrieb eine Messspannung abgegriffen wird. Durch eine Öffnung 50 ist eine Bezugspotentialelektrode einsetzbar. Eine in Figur 4 nicht dargestellte Spule zur Erzeugung eines Magnetfelds kann im Wesentlichen konzentrisch zur Öffnung 50 angeordnet werden. Die Laschen stellen daher bei der Anbringung der Spulen keinerlei Behinderung dar.

Alternativ zu der dargestellten Ausführungsform mit rechtwinklig in radialer Richtung abgebogenen Laschen könnte selbstverständlich eine Überlappung der beiden Rohrschalenteile an den Stoßstellen vorgesehen werden, an welchen diese verschweißt werden.

Eine weitere Alternative zum dargestellten Ausführungsbeispiel ist ein rohrförmiger Einsatz für eine flanschlose Ausführung eines Durchflussmessgeräts. Die magnetische Erregeranordnung ist als weitere Alternative auf der Außenseite des Stahlrohres anbringbar. Neben dem beschriebenen Ausführungsbeispiel mit Gummi als elektrisch isolierendem Material sind alternativ Fluorpolymer oder andere geeignete Materialien verwendbar. Je nach Anforderungen an die Festigkeit des rohrförmigen Einsatzes kann alternativ zur Verwendung von Edelstahl auch Messing oder Aluminium eingesetzt werden.

## Patentansprüche

1. Rohrförmiger Einsatz für einen magnetisch induktiven Durchflussmesser, wobei der rohrförmige Einsatz (6) im Wesentlichen aus einem elektrisch isolierenden Material besteht, welches zumindest in einem Messabschnitt eine mechanische Verstärkung (7) aus Metall aufweist, **dadurch gekennzeichnet, dass** zur mechanischen Verstärkung ein Metallgitter (7) vorgesehen ist, das aus zwei im Wesentlichen gleichen, vorgeformten Gitterteilen (40) besteht, die durch Stanzen und Biegen aus Gitterblech derart vorgefertigt und an im Wesentlichen parallel zur Rohrachse (14) verlaufenden Stoßkanten zusammengeschweißt sind, dass ein im Wesentlichen rohrförmiges Metallgitter (7) gebildet ist, und dass das rohrförmige Metallgitter (7) durch ein Press- oder Gießverfahren derart in das elektrisch isolierende Material eingebettet ist, dass die Öffnungen (20) des Metallgitters mit dem elektrisch isolierenden Material durchdrungen sind und dass das elektrisch isolierende Material die Innenseite (31) und die Außenseite (30) des rohrförmigen Metallgitters (7) im Wesentlichen bedeckt.

2. Rohrförmiger Einsatz nach Anspruch 1, **dadurch gekennzeichnet, dass** das rohrförmige Metallgitter (7) Erhebungen (41...44) in radialer Richtung aufweist.

3. Rohrförmiger Einsatz nach Anspruch 1 oder 2, **dadurch gekennzeichnet, dass** die beiden Gitterteile an den Stoßstellen mit in radialer Richtung nach außen gebogenen Laschen (47) versehen und an den Laschen (47) miteinander verschweißt sind.

4. Rohrförmiger Einsatz nach einem der vorhergehenden Ansprüche, **dadurch gekennzeichnet, dass** das elektrisch isolierende Material Gummi ist und dass an den beiden Enden des rohrförmigen Einsatzes jeweils ein Befestigungsflansch (4, 5) vorgesehen ist, wobei zumindest ein Befestigungsflansch (4, 5) kein Metallgitter zur Verstärkung aufweist.

5. Rohrförmiger Einsatz nach einem der vorhergehenden Ansprüche, **dadurch gekennzeichnet, dass** das Metallgitter (7) aus Edelstahl besteht.

6. Verfahren zum Herstellen eines rohrförmigen Einsatzes (6) nach einem der Ansprüche 1 bis 5, **dadurch gekennzeichnet, dass** zwei im Wesentlichen gleiche, vorgeformte Gitterteile (40) durch Stanzen und Biegen aus Gitterblech derart vorgefertigt und an im Wesentlichen parallel zur Rohrachse (14) verlaufenden Stoßkanten zusammengeschweißt werden, dass ein im Wesentlichen rohrförmiges Metallgitter (7) gebildet wird, und dass das rohrförmige Metallgitter (7) durch ein Press- oder Gießverfahren derart in das elektrisch isolierende Material eingebettet wird, dass die Öffnungen (20) des Metallgitters (7) mit dem elektrisch isolierenden Material durchdrungen werden und dass die Innenseite (31) und die Außenseite (30) des rohrförmigen Metallgitters (7) durch das elektrisch isolierende Material im Wesentlichen bedeckt werden.

7. Magnetisch induktiver Durchflussmesser mit einem rohrförmigen Einsatz (6) nach einem der Ansprüche 1 bis 5.

## Claims

1. Tubular insert for a magnetic inductive flow meter, wherein the tubular insert (6) essentially comprises an electrically insulating material which, at least in a measuring section, has a mechanical reinforcement (7) made of metal, **characterised in that** for the mechanical reinforcement a metal grid (7) is provided which comprises two essentially identical preformed grid parts (40) which are prefabricated from perforated sheet by stamping and bending and are welded to butt edges running essentially parallel to the tube axis (14) such as to form an essentially tubular metal grid (7), and **in that** the tubular metal grid (7) is embedded in the electrically insulating material by means of a pressing or casting method such that the openings (20) in the metal grid (7) have the electrically insulating material passing therethrough and **in that** the electrically insulating material essentially covers the inner surface (31) and the outer surface (30) of the tubular metal grid (7).

2. Tubular insert according to claim 1, **characterised in that** the tubular metal grid (7) has bumps (41...44) in a radial direction.

3. Tubular insert according to claim 1 or claim 2, **characterised in that** the two grid parts are equipped at the abutting points with brackets (47) bent outwards in a radial direction and are welded to one another at the brackets (47).

4. Tubular insert according to one of the preceding claims, **characterised in that** the electrically insulating material is rubber and **in that** a fastening flange (4, 5) is provided on each of the two ends of the tubular insert, wherein at least one fastening flange (4, 5) has no metal grid for reinforcement.

5. Tubular insert according to one of the preceding claims, **characterised in that** the metal grid (7) is composed of high-grade steel.

6. Method for the production of a tubular insert (6) according to one of claims 1 to 5, **characterised in that** two essentially identical preformed grid parts (40) are prefabricated from perforated sheet by stamping and bending and are welded to butt edges running essentially parallel to the tube axis (14) such as to form an essentially tubular metal grid (7), and **in that** the tubular metal grid (7) is embedded in the electrically insulating material by means of a pressing or casting method such that the openings (20) in the metal grid (7) have the electrically insulating material passing therethrough and **in that** the electrically insulating material essentially covers the inner surface (31) and the outer surface (30) of the tubular metal grid (7).

7. Magnetically inductive flow meter comprising a tubular insert (6) according to one of claims 1 to 5.

## Revendications

1. Insert tubulaire pour un débitmètre inductif magnétique, l'insert (6) tubulaire étant essentiellement en un matériau isolant du point de vue électrique, qui a, au moins dans une section de mesure, un renfort (7) mécanique en métal, **caractérisé en ce qu'**il est prévu pour le renfort mécanique une grille (7) métallique constituée de deux parties (40) de grille préformées, sensiblement identiques, qui sont préfabriquées par estampage et pliage d'une tôle de grille et qui sont soudées sur des bords de jointure s'étendant sensiblement parallèlement à l'axe (14) du tube, de manière à former une grille (7) métallique sensiblement tubulaire et **en ce que** la grille (7) métallique tubulaire est incorporée par un procédé à la presse ou de coulée dans le matériau isolant du point de vue électrique de manière à ce que les ouvertures (20) de la grille métallique soient traversées par le matériau isolant du point de vue électrique et de manière à ce que le matériau isolant du point de vue électrique recouvre sensiblement le côté (31) intérieur et le côté (30) extérieur de la grille (7) métallique tubulaire.

2. Insert tubulaire suivant la revendication 1, **caractérisé en ce que** la grille (7) métallique tubulaire a des surélévations (41...44) dans la direction radiale.

3. Insert tubulaire suivant la revendication 1 ou 2, **caractérisé en ce que** les deux parties de grille sont pourvues aux points de jointure d'éclisses (47) coudées vers l'extérieur dans la direction radiale et sont soudées entre elles sur les éclisses (47).

4. Insert tubulaire suivant l'une des revendications précédentes, **caractérisé en ce que** le matériau isolant du point de vue électrique est du caoutchouc et **en ce qu'**il est prévu aux deux extrémités de l'insert tubulaire respectivement une bride (4, 5) de fixation, au moins une bride (4, 5) de fixation n'ayant pas de grille métallique pour le renfort.

5. Insert tubulaire suivant l'une des revendications précédentes, **caractérisé en ce que** la grille (7) métallique est en acier fin.

6. Procédé de fabrication d'un insert (6) tubulaire suivant l'une des revendications 1 à 5, **caractérisé en ce que** l'on fabrique à l'avance deux parties (40) de grille préformées et sensiblement identiques par estampage et pliage d'une tôle de grille et on les soude sur des bords de jointure s'étendant sensiblement parallèlement à l'axe (14) du tube de manière à former une grille (7) métallique sensiblement tubulaire et **en ce que** l'on incorpore dans le matériau isolant du point de vue électrique la grille (7) métallique tubulaire par un procédé à la presse ou de coulée, de manière à ce que les ouvertures (20) de la grille (7) métallique soient traversées par le matériau isolant du point de vue électrique et de manière à ce que le côté (31) intérieur et le côté (30) extérieur de la grille (7) métallique tubulaire soient recouverts sensiblement par le matériau isolant du point de vue électrique.

7. Débitmètre inductif magnétique ayant un insert (6) tubulaire suivant l'une des revendications 1 à 5.
